(19) Europäisches Patentamt
European Patent Office
Office européen des brevets

(11) EP 4 206 303 A1

(12) **EUROPEAN PATENT APPLICATION**
published in accordance with Art. 153(4) EPC

(43) Date of publication:
**05.07.2023 Bulletin 2023/27**

(21) Application number: **21860955.0**

(22) Date of filing: **28.06.2021**

(51) International Patent Classification (IPC):
***C09K 23/42*** (2022.01) ***C09K 23/52*** (2022.01)
***C09D 11/03*** (2014.01)

(52) Cooperative Patent Classification (CPC):
**C09D 11/03**

(86) International application number:
**PCT/JP2021/024347**

(87) International publication number:
**WO 2022/044525 (03.03.2022 Gazette 2022/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2020 JP 2020145267**

(71) Applicant: **Nissin Chemical Industry Co., Ltd.**
**Fukui 915-0802 (JP)**

(72) Inventors:
- **KOBAYASHI, Fumika**
  **Echizen-shi**
  **Fukui 915-0802 (JP)**
- **NISHIKAWA, Tomoyuki**
  **Echizen-shi**
  **Fukui 915-0802 (JP)**

(74) Representative: **Mewburn Ellis LLP**
**Aurora Building**
**Counterslip**
**Bristol BS1 6BX (GB)**

# (54) DISPERSING AGENT, DISPERSION ELEMENT, INK COMPOSITION, AND METHOD FOR MANUFACTURING SAME

(57) The present invention provides: a dispersing agent characterized by containing (A) 1-50 mass% of an acetylene-based surfactant that has a molecular weight of 500 or less and is at least one kind of compound selected from acetylene glycols represented by a specific formula and ethoxylated acetylene glycols represented by a specific formula, and (B) 50-99 mass% of a partially or fully-neutralized styrene/maleic anhydride copolymer salt that has a weight average molecular weight of less than 10,000, and that is a salt in which a styrene/maleic anhydride copolymer represented by a specific formula and derivatives thereof have been partially or fully neutralized; a dispersion element and ink composition that use said dispersing agent; and a manufacturing method for the same.

EP 4 206 303 A1

## Description

### TECHNICAL FIELD

This invention relates to a dispersing agent for use in dispersing disperse dyes and pigments, a dispersion, an ink composition, and methods of preparing the foregoing.

### BACKGROUND ART

From the past, disperse dyes and pigments are used as coloring agents for ink. When disperse dyes and pigments are used in ink, it is necessary that disperse dyes and pigments in microparticulate form be dispersed in water. However, since the disperse dyes and pigments are insoluble in water, dispersing agents are critical for maintaining the disperse dyes and pigments in a dispersed state stably over a long period of time. As the dispersing agent suited to this end, nonionic, anionic and polymeric surfactants are proposed.

For example, Patent Documents 1 and 2 disclose that nonionic surfactants having an acetylene group are useful as the pigment dispersing agent. Although the nonionic surfactants having an acetylene group are superior in ink penetrability and antifoaming, they tend to have inferior dispersibility, for example, they take a long time for dispersion, as compared with other dispersing agents.

Patent Documents 3 and 4 disclose that copolymers of styrene with maleic anhydride, especially copolymers of ester or urethane-modified styrene with maleic anhydride are useful as the pigment dispersing agent. However, some of these copolymers are incompatible with resins serving as the ink binder. When such a copolymer is added to an ink composition comprising a resin binder, there arises the problem that the copolymer causes the ink composition to undergo a viscosity buildup or degrade its printability.

Patent Document 5 achieves to enhance the storage stability of an oily ink composition by adding a styrene/maleic anhydride copolymer to the ink composition along with a particulate fluorescent resin, non-aqueous solvent, basic dispersing agent, and liquid organic compound having an acidic group. It refers nowhere to effectiveness with an aqueous solvent.

Exemplary combinations of an acetylenic surfactant with a styrene-maleic acid copolymer include a dispersing agent composition comprising an acetylenic surfactant with a styrene-maleic acid copolymer (Patent Document 6), an inkjet composition comprising an acetylenic surfactant with a styrene-maleic acid copolymer based dispersing agent (Patent Document 7), and a powder coating composition comprising an acetylenic surfactant with a styrene-maleic acid copolymer based dispersing agent (Patent Document 8). With respect to the combination of components in these compositions, there remains room for further improvement.

Specifically, Patent Document 6 has the shortcomings that since the styrene-maleic acid copolymer used therein is not in salt form, its solubility in water is poor, the combined use of polyoxyalkylene alkyl ether is essential, and heating is necessary in preparing a dispersing agent composition. Patent Document 7 is characterized by the use of an ester-modified form of styrene-maleic acid copolymer based dispersing agent. Although certain performance is achieved by modification with an ester containing a functional group for enhancing dispersing properties, a probable drawback is that the amount of addition is increased until a higher molecular weight is reached. It is not definitely described if the combined use of an acetylenic surfactant is effective. In Patent Document 8, coating workability and storage stability are enhanced by adding an alkylene oxide to a styrene-maleic acid copolymer. Although the acetylenic surfactant used therein exerts an effect when the alkylene oxide adduct is used, it is not definitely described if the composition is effective when the alkylene oxide is not added.

### PRIOR ART DOCUMENTS

### PATENT DOCUMENTS

Patent Document 1: JP-A 2000-290578
Patent Document 2: JP-A 2002-020673
Patent Document 3: JP-A H09-104837
Patent Document 4: JP-A 2005-029706
Patent Document 5: JP-A 2018-090666
Patent Document 6: JP-A 2004-066047
Patent Document 7: JP-A 2019-172834
Patent Document 8: JP-A 2004-224833

## SUMMARY OF INVENTION

## TECHNICAL PROBLEM

An object of the invention, which has been made under the above-mentioned circumstances, is to provide a dispersing agent which allows, even in a small amount, a disperse dye or pigment to be dispersed in a short time and exerts wettability, a dispersion having improved storage stability, an ink composition comprising the foregoing, and methods of preparing the foregoing.

## SOLUTION TO PROBLEM

Making extensive investigations to attain the above object, the inventors have found that a dispersing agent comprising an acetylenic surfactant in combination with a partially or completely neutralized salt of styrene/maleic anhydride copolymer exerts improved dispersibility, wettability and defoamability when added in a small amount, maintains storage stability, and is effective for finely dividing a disperse dye or pigment. The invention is predicated on this finding.

Accordingly, the invention provides a dispersing agent, a dispersion, an ink composition, and methods of preparing the foregoing, as defined below.

1. A dispersing agent comprising

(A) 1 to 50% by weight of an acetylenic surfactant which is at least one compound selected from acetylene glycols having the formula (1):

[Chem. 1]

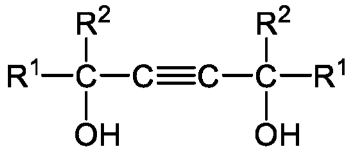

(1)

wherein $R^1$ and $R^2$ each are a $C_1$-$C_5$ alkyl group, and ethoxylated acetylene glycols having the formula (2):

[Chem. 2]

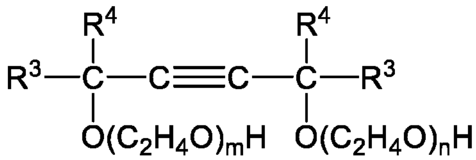

(2)

wherein $R^3$ and $R^4$ each are a $C_1$-$C_5$ alkyl group, m and n each are a positive number of 0.5 to 25, m+n is from 1 to 40, the compound having a molecular weight of up to 500, and

(B) 50 to 99% by weight of a partially or completely neutralized styrene/maleic anhydride copolymer salt which is obtained by partially or completely neutralizing a styrene/maleic anhydride copolymer having the formula (3):

[Chem. 3]

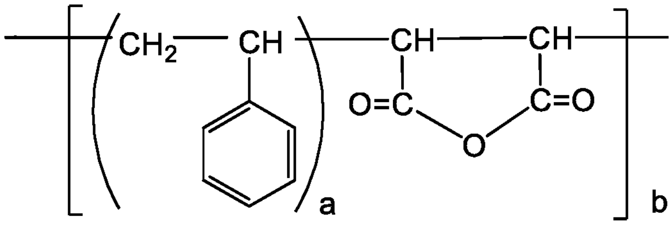

(3)

wherein a is an integer of 1 to 10 and b is an integer of 1 to 100, or a derivative thereof, and has a weight average molecular weight of less than 10,000.

2. The dispersing agent of 1 wherein in formula (3), a is 1 or 2.
3. The dispersing agent of 1 or 2 wherein the partially or completely neutralized styrene/maleic anhydride copolymer salt (B) is a salt obtained by partially or completely neutralizing the styrene/maleic anhydride copolymer or derivative thereof with ammonia, morpholine or an organic amine.
4. The dispersing agent of any one of 1 to 3, consisting of components (A) and (B).
5. The dispersing agent of any one of 1 to 4 wherein the acetylenic surfactant as component (A) has a HLB value of up to 12.
6. The dispersing agent of any one of 1 to 5 which takes the form of an aqueous solution containing 0.3% by weight of the dispersing agent calculated as the total of effective amounts of components (A) and (B), the aqueous solution having a foam height of up to 20 mL.
7. The dispersing agent of any one of 1 to 6 which is used for dispersing a disperse dye or pigment in an aqueous solvent.
8. A dispersion comprising a dispersing agent, a disperse dye and/or pigment, and an aqueous solvent, the dispersing agent being of any one of 1 to 7.
9. An ink composition comprising the dispersion of 8.
10. A method of preparing a dispersion comprising the step of mixing and dispersing the dispersing agent of any one of 1 to 6, a disperse dye and/or pigment, and an aqueous solvent.
11. A method of preparing an ink composition comprising the steps of:

mixing and dispersing the dispersing agent of any one of 1 to 6, a disperse dye and/or pigment, and an aqueous solvent to form a dispersion, and
mixing the dispersion with at least one ingredient selected from the group consisting of water, a water-soluble organic solvent, resin, UV absorber, antioxidant, pH adjustor, antiseptic agent, and viscosity modifier.

## ADVANTAGEOUS EFFECTS OF INVENTION

The dispersing agent of the invention allows a disperse dye or pigment to be dispersed independent of the type of disperse dye or pigment and in a small addition amount, and enables to reduce the dispersing time. The dispersion and ink composition comprising the dispersing agent exhibit improved wettability and dispersion stability.

## DESCRIPTION OF EMBODIMENTS

The invention provides a dispersing agent comprising (A) at least one compound selected from acetylene glycols having the formula (1) and ethoxylated acetylene glycols having the formula (2) and (B) a partially or completely neutralized salt of styrene/maleic anhydride copolymer.
The acetylene glycol as component (A) has the formula (1).

[Chem. 4]

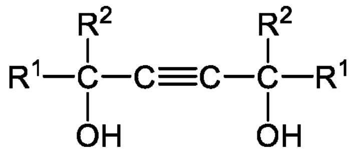

(1)

In formula (1), $R^1$ and $R^2$ each are a $C_1$-$C_5$ alkyl group.

Examples of the acetylene glycol having formula (1) include 2,5,8,11-tetramethyl-6-dodecyne-5,8-diol, 5,8-dimethyl-6-dodecyne-5,8-diol, 2,4,7,9-tetramethyl-5-decyne-4,7-diol, 4,7-dimethyl-5-decyne-4,7-diol, 2,3,6,7-tetramethyl-4-octyne-3,6-diol, 3,6-dimethyl-4-octyne-3,6-diol, and 2,5-dimethyl-3-hexyne-2,5-diol.

The ethoxylated acetylene glycol has the formula (2).

[Chem. 5]

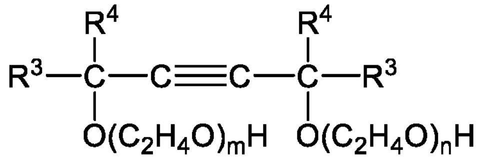

(2)

In formula (2), $R^3$ and $R^4$ each are a $C_1$-$C_5$ alkyl group, m and n each are a positive number of 0.5 to 25, and m+n is from 1 to 40.

Examples of the ethoxylated acetylene glycol having formula (2) include ethylene oxide derivatives of the above acetylene glycols, such as ethoxylated form (average m+n = 6) of 2,5,8,11-tetramethyl-6-dodecyne-5,8-diol, ethoxylated form (average m+n = 10) of 2,4,7,9-tetramethyl-5-decyne-4,7-diol, ethoxylated form (average m+n = 4) of 2,4,7,9-tetramethyl-5-decyne-4,7-diol, and ethoxylated form (average m+n = 4) of 3,6-dimethyl-4-octyne-3,6-diol. In formula (2), the molar amount of ethylene oxide units added is preferably 0.5 to 25 moles, and the total molar amount of addition is preferably 1 to 40 moles. If the total molar amount of ethylene oxide units added exceeds 40 moles, the compound becomes more soluble in water and more foamable, leading to a decline of defoaming effect.

The acetylene glycol as component (A) preferably has an HLB value of 2 to 12, more preferably 2 to 10 though HLB is not particularly limited. As used herein, the hydrophile-lipophile balance (HLB) is defined by the following equation or Gliffin's method. An HLB value is on a scale of 0 to 20, a value closer to 0 indicating more lipophilic and a value closer to 20 indicating more hydrophilic.

[Math. 1]

$$HLB = 20 \times \frac{\text{molecular weight of hydrophilic portion}}{\text{molecular weight of whole molecule}}$$

The acetylene glycol as component (A) may be used alone or in admixture of two or more. The amount of component (A) blended should be 1 to 50% by weight, preferably 1 to 40% by weight, more preferably 1 to 20% by weight, provided that the total amount of components (A) and (B) is an effective amount which is 100% by weight. If the amount of component (A) blended is less than 1% by weight, the wettability to the disperse dye and pigment is degraded. If the amount exceeds 50% by weight, the dispersibility of the disperse dye and pigment is aggravated.

Next, the styrene/maleic anhydride copolymer and derivatives thereof as component (B) have the following formula (3) wherein "a" is an integer of 1 to 10, preferably 1 or 2 and "b" is an integer of 1 to 100.

[Chem. 6]

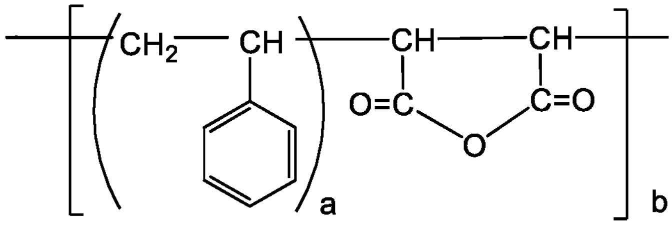

(3)

The styrene/maleic anhydride copolymer having formula (3) is a copolymer of styrene and maleic anhydride. An esterified form of the styrene/maleic anhydride copolymer which is obtained by esterifying the copolymer to introduce a carboxy or hydroxy group therein may also be used. The copolymerization ratio (molar ratio) of styrene monomer to maleic anhydride is preferably 1/1 or 2/1 though not particularly limited. Also, styrene monomer and maleic anhydride may be copolymerized either blockwise or randomly to form a copolymer.

In the practice of the invention, the styrene/maleic anhydride copolymer or derivative thereof is used in the form of a partially or completely neutralized salt. While it suffices that the styrene/maleic anhydride copolymer or derivative thereof is neutralized even in part, the copolymer is preferably at least 30%, more preferably at least 50% neutralized. Since the degree of partial or complete neutralization can be managed in terms of pH, an aqueous solution of the neutralized salt of the styrene/maleic anhydride copolymer is adjusted to pH 8 to 12. Examples of the alkali used for neutralization include ammonia, organic amines such as morpholine, cyclohexylamine, monopropanolamine, and isobutanolamine, monovalent alkali metal hydroxides such as sodium hydroxide and potassium hydroxide, and monovalent alkali metal salts. Of these, ammonia, morpholine, and organic amines are preferred. Suitable organic amines include mono, di or tri-alkylamines of 1 to 8 carbon atoms and mono, di or tri-alcoholamines of 1 to 8 carbon atoms. On use as a dispersing agent, the neutralized salt of styrene/maleic anhydride copolymer may take the form of an aqueous solution. In view of workability, the solution is preferably adjusted such that the concentration of the neutralized salt of styrene/maleic anhydride copolymer or solid concentration may be about 10 to 70% by weight.

The partially or completely neutralized salt of styrene/maleic anhydride copolymer has a weight average molecular weight (Mw) of less than 10,000, preferably 2,000 to 8,000, more preferably 3,000 to 5,000. As used herein, the Mw of a resin may be determined by gel permeation chromatography (GPC). Organic solvents such as methanol/water may be used as the eluent and standard polyethylene oxide (PEO) or standard polyethylene glycol (PEG) may be used as the standard.

As the partially or completely neutralized salt of styrene/maleic anhydride copolymer or esterified product thereof, commercially available products may be used. For example, ammonium salts of esterified form of styrene/maleic anhydride copolymer available as SMA resin series: SMA 1440H and SMA 2625H from Kawahara Petrochemical Co., Ltd. and ammonium salts of styrene/maleic anhydride copolymer available as SMA resin series: SMA 1000H, SMA 2000H and SMA 3000H from Kawahara Petrochemical Co., Ltd. may be used as well as SN dispersant series: SN Dispersant 5027 and SN Dispersant 5029 by San Nopco, Ltd., DKS Discoat series, DKS Discoat N-10 and DKS Discoat N-14 by DKS Co., Ltd., NUOSPERSE FX-600 by Elementis Specialties, and XIRAN® series: XIRAN® 1000H, XIRAN® 2000H and XIRAN® 3000H by Tomoe Engineering Co., Ltd. These may be used alone or in admixture. Some of these commercial products are in the form of aqueous solution, which can be used insofar as adjustment is made such that the effective amount of component (B) may finally fall in the range of the invention.

The amount of component (B) blended should be 50 to 99% by weight, preferably 60 to 99% by weight, provided that the total amount of components (A) and (B) is an effective amount which is 100% by weight. If the amount of component (B) blended is less than 50% by weight, the dispersibility of the disperse dye and pigment is aggravated. If the amount exceeds 99% by weight, the wettability to the disperse dye and pigment is degraded.

The dispersing agent of the invention may be obtained by mixing components (A) and (B) according to a well-known mixing preparation method using a propeller agitator or the like. On use of a component which is solid at normal temperature, heat mixing may be employed if necessary. Component (B) may be previously prepared in aqueous solution form before it is mixed with component (A).

The dispersing agent desirably has a foam height (foam generation) of up to 20 mL and a defoam height (foam decay) of up to 10 mL. When a measuring cylinder is filled with 20 mL of an aqueous solution in which the amount of dispersing agent added is 0.3 wt% as the effective amount, capped and shaken for 1 minute, the foam height is the height of foam immediately after shaking. The defoam height is the height of foam after 5 minutes of static holding. As used herein, the effective amount means the total amount of components (A) and (B).

Another embodiment of the invention is a dispersion comprising the aforementioned dispersing agent, a disperse

dye and/or pigment, and an aqueous solvent.

The components of the dispersion are described below.

In the dispersion, the amount of the dispersing agent blended is preferably 0.1 to 100 parts by weight, more preferably 0.1 to 50 parts by weight, even more preferably 0.1 to 20 parts by weight per 100 parts by weight of the disperse dye and pigment. A too small amount of the dispersing agent fails to fully disperse the disperse dye or pigment whereas a too large amount of the dispersing agent means that more dispersing agent is left non-adsorbed to the disperse dye or pigment in the dispersion.

The disperse dye used herein is not particularly limited and may be selected from well-known dyes. The disperse dyes are classified into benzene azo (monoazo and disazo), heterocyclic azo (thiazole azo, benzothiazole azo, pyridone azo, pyrazolone azo, thiophene azo, etc.), anthraquinone, and condensed (quinophthalone, styryl, coumarin, etc.) chemical structures and characterized in that they are substantially insoluble in water due to the lack of water-soluble groups and have a smaller molecular weight of up to 2,000 than other dyes.

Examples of the disperse dye which is preferably used herein are shown below.

yellow dyes such as C.I. Disperse Yellow 3, 4, 5, 7, 9, 13, 24, 30, 33, 34, 42, 44, 49, 50, 51, 54, 56, 58, 60, 63, 64, 66, 68, 71, 74, 76, 79, 82, 83, 85, 86, 88, 90, 91, 93, 98, 99, 100, 104, 114, 116, 118, 119, 122, 124, 126, 135, 140, 141, 149, 160, 162, 163, 164, 165, 179, 180, 182, 183, 186, 192, 198, 199, 202, 204, 210, 211, 215, 216, 218, and 224;
orange dyes such as C.I. Disperse Orange 1, 3, 5, 7, 11, 13, 17, 20, 21, 25, 29, 30, 31, 32, 33, 37, 38, 42, 43, 44, 45, 47, 48, 49, 50, 53, 54, 55, 56, 57, 58, 59, 61, 66, 71, 73, 76, 78, 80, 89, 90, 91, 93, 96, 97, 119, 127, 130, 139, and 142;
red dyes such as C.I. Disperse Red 1, 4, 5, 7, 11, 12, 13, 15, 17, 27, 43, 44, 50, 52, 53, 54, 55, 56, 58, 59, 60, 65, 72, 73, 74, 75, 76, 78, 81, 82, 86, 88, 90, 91, 92, 93, 96, 103, 105, 106, 107, 108, 110, 111, 113, 117, 118, 121, 122, 126, 127, 128, 131, 132, 134, 135, 137, 143, 145, 146, 151, 152, 153, 154, 157, 159, 164, 167, 169, 177, 179, 181, 183, 184, 185, 188, 189, 190, 191, 192, 200, 201, 202, 203, 205, 206, 207, 210, 221, 224, 225, 227, 229, 239, 240, 257, 258, 277, 278, 279, 281, 288, 289, 298, 302, 303, 310, 311, 312, 320, 324, and 328;
violet dyes such as C.I. Disperse Violet 1, 4, 8, 23, 26, 27, 28, 31, 33, 35, 36, 38, 40, 43, 46, 48, 50, 51, 52, 56, 57, 59, 61, 63, 69, and 77;
green dyes such as C.I. Disperse Green 6:1 and 9;
brown dyes such as C.I. Disperse Brown 1, 2, 4, 9, 13, 19, 21, and 27;
blue dyes such as C.I. Disperse Blue 3, 7, 9, 14, 16, 19, 20, 26, 27, 35, 43, 44, 54, 55, 56, 58, 60, 62, 64, 71, 72, 73, 75, 79, 81, 82, 83, 87, 91, 93, 94, 95, 96, 102, 106, 108, 112, 113, 115, 118, 120, 122, 125, 128, 130, 139, 141, 142, 143, 146, 148, 149, 153, 154, 158, 165, 167, 171, 173, 174, 176, 181, 183, 185, 186, 187, 189, 197, 198, 200, 201, 205, 207, 211, 214, 224, 225, 257, 259, 267, 268, 270, 284, 285, 287, 288, 291, 293, 295, 297, 301, 315, 330, 333, 359, and 360;
black dyes such as C.I. Disperse Black 1, 3, 10, and 24.

Examples of the dye available from Nippon Kayaku Co., Ltd. which can be preferably used include Kayaset Black K-R, A-N, Kayalon Polyester Black S-200, EX-SF 300, G-SF, BR-SF, 2B-SF 200, TA-SF 200, AUL-S, Kayaset Yellow K-CL, Kayalon Polyester Yellow 4G-E, Kayalon Polyester Light Yellow 5G-S, Kayaset Red K-BL, Kayacelon Red E-BF, SMS-5, SMS-12, Kayalon Polyester Red TL-SF, BR-S, BL-E, HL-SF, 3BL-S200, AUL-S, Kayalon Polyester Light Red B-S200, Kayalon Polyester Rubine BL-S200, Kayaset Blue N, K-FL, MSB-13, Kayalon Polyester Blue BR-SF, T-S, Kayalon Polyester Light Blue BGL-S200, Kayalon Polyester Turq Blue GL-S200, and Kayalon Polyester Blue Green FCT-S.

Examples of the dye available from Orient Chemical Industries Co., Ltd. which can be preferably used include Valifast Black 3806, 3810, 3820, Oil Black BS, BY, B-85, 860, Water Yellow 6C, Valifast Yellow 1101, 1105, 3110, 3120, 4120, 4126, Oplas Yellow 130, 140, Oil Yellow GG-S, 105, 107, 129, 818, Water Red 27, Valifast Red 1306, 1355, 2303, 3311, 3320, Valifast Orange 3210, Valifast Brown 2402, Oil Red 5B, Oil Pink 312, Oil Brown BB, Valifast Blue 1601, 1603, 1605, 2606, 3806, 3820, Oil Blue #15, #613, 613, N14, and BOS.

Examples of the dye available from Sumitomo Chemical Co., Ltd. which can be preferably used include Sumikaron Black S-BL, S-BF extra conc., S-RPD, S-XE 300%, Sumikaron Yellow SE-4G, SE-5G, SE-3GL conc., SE-RPD, Sumikaron Brilliant Flavine S-10G, Sumikaron Red E-FBL, E-RPD(E), S-RPD(S), Sumikaron Brilliant Red S-BF, S-BLF, SE-BL, SE-BGL, SE-2BF, SE-3BL(N), Sumikaron Red E-FBL, E-RPD(E), S-RPD(S), Sumikaron Brilliant Red S-BF, S-BLF, SE-BL, SE-BGL, SE-2BF, SE-3BL(N), Sumikaron Brilliant Blue S-BL, Sumikaron Torquois Blue S-GL, S-GLF grain.

Examples of the dye available from BASF which can be preferably used include Basacryl Black X-BGW, Naozapon Black X-51, X-55, Neozapon Yellow 081, Lurafix Yellow 138, Zapon Blue 807, Neozapon Blue 807, Lurafix Blue 590, 660, Orasol Black RLI, RL, CN, Oracet Yellow 8GF, GHS, Orasol Red G, Oracet Pink RP, Orasol Blue GL, GN, 2R.

Examples of the dye available from Taoka Chemical Industry Co., Ltd. which can be preferably used include

Oleosol Fast Black AR, RL, Oleosol Fast Pink FB, Rhodamine A, B, B gran., Oleosol Fast Yellow 2G, Oleosol Fast Blue ELN.

Examples of the dye available from Hoya Chemical Industry Co., Ltd. which can be preferably used include Spilon Black BNH and MH special.

Examples of the dye available from Mitsui Chemical Co., Ltd. which can be preferably used include PS Yellow GG, MS Yellow HD-180, PS Red G, MS Magenta VP.

Exemplary of the dye available from Bayer AG which can be preferably used is Ceres Blue GN 01.

Examples of the dye available from Sumika Color Co., Ltd. which can be preferably used include TS Yellow 118 cake, ESC Yellow 155, Sumiplast Yellow HLR, GC, TS Turq Blue 618, 606, ESC Blue 655, 660, Sumiplast Blue S and OA.

The pigment is not particularly limited and any well-known pigments may be used. Exemplary organic pigments include azo pigments such as soluble azo pigments, insoluble azo pigments, condensed azo pigments; polycyclic pigments such as quinacridone pigments, perylene pigments, perinone pigments, isoindolinone pigments, isoindoline pigments, dioxazine pigments, thioindigo pigments, anthraquinone pigments, quinophthalone pigments, metal complex pigments, diketo-pyrrolo-pyrrole pigments; and phthalocyanine pigments. Exemplary inorganic pigments include carbon black, metal oxides, metal hydroxides, metal sulfides, metal phthalocyanides, and metal chlorides. Suitable carbon black species include furnace black, lamp black, acetylene black, and channel black.

Examples of the pigment include red pigments such as C.I. Pigment Red 7, 9, 14, 41, 48:1, 48:2, 48:3, 48:4, 81:1, 81:2, 81:3, 122, 123, 146, 149, 168, 177, 178, 179, 187, 200, 202, 208, 210, 215, 224, 254, 255, and 264;

yellow pigments such as C.I. Pigment Yellow 1, 3, 5, 6, 14, 55, 60, 61, 62, 63, 65, 73, 74, 77, 81, 93, 97, 98, 104, 108, 110, 128, 138, 139, 147, 150, 151, 154, 155, 166, 167, 168, 170, 180, 188, 193, 194, and 213;
orange pigments such as C.I. Pigment Orange 36, 38, and 43;
blue pigments such as C.I. Pigment Blue 15, 15:2, 15:3, 15:4, 15:6, 16, 22, and 60;
green pigments such as C.I. Pigment Green 7, 36, and 58;
violet pigments such as C.I. Pigment Violet 19, 23, 32, and 50;
black pigments such as C.I. Pigment Black 7.

Of these, preference is given to C.I. Pigment Red 122, C.I. Pigment Yellow 74, 128, 155, C.I. Pigment Blue 15:3, 15:4, 15:6, C.I. Pigment Green 7, 36, C.I. Pigment Violet 19, and C.I. Pigment Black 7.

The type, particle size and treatment of the disperse dye and/or pigment in the dispersion may be selected as appropriate depending on a particular purpose. The disperse dye and/or pigment in the dispersion may be used alone or in admixture of two or more.

The concentration of the disperse dye and pigment in the dispersion is preferably 1 to 50% by weight, more preferably 5 to 50% by weight based on 100% by weight of the dispersion. If the concentration of the disperse dye and pigment exceeds 50% by weight, which corresponds to a higher density of the disperse dye and pigment in the dispersion, there is a possibility of agglomeration because free movement is prohibited.

As the aqueous solvent, water and/or water-soluble organic solvents may be used, optionally in admixture of two or more. Water is preferably pure water or deionized (ion-exchanged) water. Suitable water-soluble organic solvents include alcohols such as methyl alcohol, ethyl alcohol, n-propyl alcohol, isopropyl alcohol, n-butyl alcohol, sec-butyl alcohol, and tert-butyl alcohol; glycols such as ethylene glycol, propylene glycol, dipropylene glycol, butylene glycol, triethylene glycol, 1,2,6-hexanetriol, thiodiglycol, hexylene glycol, and diethylene glycol; glycol ethers such as ethylene glycol monomethyl ether, ethylene glycol monoethyl ether, diethylene glycol methyl ether, diethylene glycol ethyl ether, triethylene glycol monomethyl ether, triethylene glycol monoethyl ether, and triethylene glycol monobutyl ether; polyhydric alcohols such as glycerin; and nitrogen-containing compounds such as N-methyl-2-pyrrolidone, 2-pyrrolidone, and 1,3-dimethyl-2-imidazolidinone. The proportion of the water and water-soluble organic solvent in the dispersion is preferably 5 to 95% by weight, more preferably 30 to 90% by weight based on 100% by weight of the dispersion.

The method of preparing the dispersion preferably involves the step of mixing and dispersing the dispersing agent, the disperse dye and/or pigment, and the aqueous solvent. For example, the dispersion may be prepared by mixing the dispersing agent, the disperse dye and/or pigment, and the aqueous solvent on a mixing/dispersing machine such as a paint shaker, bead mill, ball mill, dissolver or kneader. On use of a component which is solid at normal temperature, heat mixing may be employed if necessary.

The dispersion desirably has a surface tension of up to 70 mN/m, more desirably up to 60 mN/m.

The dispersion desirably has a viscosity of up to 10.0 mPa·s, more desirably up to 5.0 mPa s. The lower limit of the viscosity of the dispersion is desirably at least 1.0 mPa s. The viscosity is measured at 25°C.

The disperse dye and/or pigment in the dispersion desirably has an average particle size of up to 500 nm, more desirably up to 300 nm, though depending on the type of the disperse dye and/or pigment. As used herein, the average particle size refers to a median diameter (D50).

The dispersion is improved in dispersion stability and desirably has an interfacial transport rate of up to 3.0 μm/s.

A further embodiment of the invention is an ink composition comprising the aforementioned dispersion and optionally, a resin and other additives. That is, the ink composition preferably contains the following components (i) to (v):

(i) the dispersing agent,
(ii) the disperse dye and/or pigment,
(iii) water and/or water-soluble organic solvent,
(iv) a resin,
(v) at least one additive selected from the group consisting of a UV absorber, antioxidant, pH adjustor, antiseptic agent, and viscosity modifier.

The concentration of the disperse dye and/or pigment in the ink composition is preferably 0.1 to 20% by weight, more preferably 0.1 to 10% by weight based on 100% by weight of the ink composition.

The concentration of the water and/or water-soluble organic solvent in the ink composition is preferably 50 to 99% by weight, more preferably 60 to 95% by weight based on 100% by weight of the ink composition.

The resin in the ink composition is preferably a polymer having hydrophobic and hydrophilic groups. The polymer preferably has at least one functional group selected from among alkyl, cycloalkyl, and aryl groups as the hydrophobic group. Also preferably the polymer has at least one functional group selected from among carboxy, sulfo, hydroxy, amino, and amide groups as the hydrophilic group. Such a polymer is obtained by polymerizing a monomer or oligomer having a functional group such as acryloyl, methacryloyl, vinyl or allyl group. Examples of the monomer which can be used herein include styrene, tetrahydrofurfuryl acrylate, butyl methacrylate, (α, 2, 3 or 4)-alkylstyrene, (α, 2, 3 or 4)-alkoxystyrene, 3,4-dimethylstyrene, α-phenylstyrene, divinylbenzene, vinylnaphthalene, dimethylaminomethyl (meth)acrylate, dimethylaminoethyl (meth)acrylate, dimethylaminopropylacrylamide, N,N-dimethylaminoethyl acrylate, acryloylmorpholine, N,N-dimethylacrylamide, N-isopropylacrylamide, N,N-diethylacrylamide, methyl (meth)acrylate, ethyl (meth)acrylate, propyl (meth)acrylate, ethylhexyl (meth)acrylate, other alkyl (meth)acrylates, methoxydiethylene glycol (meth)acrylate, (meth)acrylates of diethylene glycol or polyethylene glycol having an ethoxy, propoxy or butoxy group, cyclohexyl (meth)acrylate, benzyl (meth)acrylate, phenoxyethyl (meth)acrylate, isobornyl (meth)acrylate, hydroxyalkyl (meth)acrylates, fluorine, chlorine or silicon-containing (meth)acrylates, (meth)acrylamide, and maleic acid amide. When a crosslinking structure is introduced in addition to a monofunctional monomer such as (meth)acrylic acid, compounds having an acryloyl or methacryloyl group can be used, for example, (meth)acrylates such as (mono, di, tri, tetra or poly)-ethylene glycol di(meth)acrylate, (meth)acrylates of 1,4-butanediol, 1,5-pentanediol, 1,6-hexanediol, 1,8-octanediol, and 1,10-decanediol, trimethylolpropane tri(meth)acrylate, glycerin (di or tri)-(meth)acrylate, di(meth)acrylates of ethylene oxide adducts of bisphenol A or F, neopentylglycol di(meth)acrylate, pentaerythritol tetra(meth)acrylate, and dipentaerythritol hexa(meth)acrylate.

The proportion of the resin in the ink composition is preferably 0 to 30% by weight, more preferably 0 to 20% by weight based on 100% by weight of the ink composition, though not particularly limited. When the resin is blended in the ink composition, the amount of the resin is preferably at least 1% by weight.

The ink composition may contain a variety of additives. Suitable additives include a UV absorber, antioxidant, pH adjustor, antiseptic agent, and viscosity modifier. Any suitable additive(s) may be selected and blended in the ink composition. The amount of these additives blended is the balance of 100% by weight of the dispersion or ink composition, left after removal of the disperse dye and/or pigment, water and/or water-soluble organic solvent and resin, specifically 0 to 10% by weight based on 100% by weight of the ink composition.

Although the method of preparing the ink composition is not particularly limited, a method involving the steps of mixing and dispersing the dispersing agent with the disperse dye and/or pigment and the aqueous solvent to form a dispersion, and mixing the dispersion with water and/or water-soluble organic solvent, the resin, and at least one ingredient selected from the UV absorber, antioxidant, pH adjustor, antiseptic agent, and viscosity modifier is preferred.

The ink composition is applied onto a recording medium by an inkjet recording system, a recording system using a writing tool such as a pen, or a printing system. The ink composition is preferably used in the inkjet recording system.

## EXAMPLES

Examples and Comparative Examples are given below for further illustrating the invention although the invention is not limited thereto. In Examples, all parts and % are by weight.

[Example 1]

An aqueous solution of a neutralized salt of styrene/maleic anhydride copolymer was prepared by dissolving

24.3 parts of compound (B-1) as component (B) in 72.8 parts of deionized water. Then 0.9 part of compound (A-1) as component (A) and 2.1 parts of dipropylene glycol as the aqueous solvent were added to the solution and agitated, obtaining a dispersing agent.

[Examples 2 to 9 and Comparative Examples 1 to 10]

By the same procedure as in Example 1, dispersing agents as formulated in Tables 1 and 2 were prepared.
Each dispersing agent was examined for foam generation and foam decay by the following method. The results are shown in Tables 1 and 2. The agents of Comparative Examples 7 and 10 were neither dissolved in water nor dispersed uniformly.

<Foam generation>

Immediately after a measuring cylinder was filled with an effective amount of dispersing agent, i.e., 20 mL of 0.3 wt% aqueous solution of dispersing agent and shaken on a shaking machine (Iwaki KM Shaker V-SX) for 1 minute, the height of the foam generated was measured. A foam height of up to 20 mL is preferred.

<Foam decay>

After the sample subjected to the foam height measurement was held static for 5 minutes, the foam height was measured. A defoam height of up to 10 mL is desirable.
The compounds used as components (A) and (B) in Tables 1 and 2 are shown below.

(A-1): 2,5,8,11-tetramethyl-6-dodecyne-5,8-diol (molecular weight 254, HLB 2.7)

(A-2): 2,4,7,9-tetramethyl-5-decyne-4,7-diol (molecular weight 226, HLB 3.0)

(A-3): ethoxylated form of 2,4,7,9-tetramethyl-5-decyne-4,7-diol corresponding to formula (2) wherein the average value of m+n is 4 (molecular weight 402, HLB 8.8)

(A-4): ethoxylated form of 2,4,7,9-tetramethyl-5-decyne-4,7-diol corresponding to formula (2) wherein the average value of m+n is 10 (molecular weight 666, HLB 13.2)

(B-1): isobutanolamine salt of styrene/maleic anhydride copolymer having Mw of 4,600 and styrene/maleic anhydride molar ratio of 1/1

(B-2): ammonium salt of esterified styrene/maleic anhydride copolymer having Mw of 3,600 and styrene/maleic anhydride molar ratio of 1/1

(B-3): ammonium salt of styrene/maleic anhydride copolymer having Mw of 5,700 and styrene/maleic anhydride molar ratio of 1/1

(B-4): ammonium salt of styrene/maleic anhydride copolymer having Mw of 3,500 and styrene/maleic anhydride molar ratio of 1/1

(B-5): ammonium salt of styrene/maleic anhydride copolymer having Mw of 5,200 and styrene/maleic anhydride molar ratio of 1/1

(B-6): ammonium salt of styrene/maleic anhydride copolymer having Mw of 4,300 and styrene/maleic anhydride molar ratio of 3/1

(B-7): non-neutralized styrene/maleic anhydride copolymer having Mw of 5,000 and styrene/maleic anhydride molar ratio of 1/1

It is noted that the Mw of compounds (B-1) to (B-6) was measured by GPC using methanol/water = 70/30 as the eluent and PEG/PEO as the standard. The Mw of compound (B-7) was measured by GPC using THF as the eluent and polystyrene as the standard.

[Table 1]

| | | | Example | | | | | | | | |
|---|---|---|---|---|---|---|---|---|---|---|---|
| | | | 1 | 2 | 3 | 4 | 5 | 6 | 7 | 8 | 9 |
| Compositional ratio (wt%) | (A) | | 3.6 | 11.0 | 11.0 | 5.9 | 11.8 | 4.4 | 4.4 | 3.0 | 3.0 |
| | (B) | | 96.4 | 89.0 | 89.0 | 94.1 | 88.2 | 95.6 | 95.6 | 97.0 | 97.0 |
| Sum of ratios (%) | | | 100.0 | 100.0 | 100.0 | 100.0 | 100.0 | 100.0 | 100.0 | 100.0 | 100.0 |
| Blending ratio of dispersing agent (pbw) | (A) | A-1 | 0.9 | | | 1.5 | 3.0 | 0.9 | 0.9 | 0.9 | 0.9 |
| | | A-2 | | 3.0 | | | | | | | |
| | | A-3 | | | 3.0 | | | | | | |
| | | A-4 | | | | | | | | | |
| | (B) | B-1 | 24.3 | 24.3 | 24.3 | 23.8 | 22.5 | | | | |
| | | B-2 | | | | | | 19.4 | | | |
| | | B-3 | | | | | | | 19.4 | | |
| | | B-4 | | | | | | | | 29.1 | |
| | | B-5 | | | | | | | | | 29.1 |
| | | B-6 | | | | | | | | | |
| | | B-7 | | | | | | | | | |
| | Solvent | dipropylene glycol | 2.1 | 0.0 | 0.0 | 3.5 | 7.0 | 2.1 | 2.1 | 2.1 | 2.1 |
| | | pure water | 72.8 | 72.8 | 72.8 | 71.3 | 67.5 | 77.6 | 77.6 | 67.9 | 67.9 |
| Amount of effective components in dispersing agent (%) | | | 25 | 27 | 27 | 25 | 26 | 20 | 20 | 30 | 30 |
| pH of aqueous solution of neutralized salt | | | 9 | 9 | 9 | 9 | 9 | 9 | 9 | 10 | 9 |
| Tests | Foam height (mL) | | 3 | 8 | 17 | 2 | 2 | 3 | 3 | 0 | 0 |
| | Defoam height (mL) | | 0 | 0 | 10 | 0 | 0 | 0 | 0 | 0 | 0 |

[Table 2]

| | | | Comparative Example | | | | | | | | | |
|---|---|---|---|---|---|---|---|---|---|---|---|---|
| | | | 1 | 2 | 3 | 4 | 5 | 6 | 7 | 8 | 9 | 10 |
| Compositional ratio (wt%) | | (A) | 0.0 | 0.0 | 0.0 | 0.0 | 0.0 | 0.0 | 0.0 | 11.0 | 5.8 | 0.9 |
| | | (B) | 100.0 | 100.0 | 100.0 | 100.0 | 100.0 | 100.0 | 100.0 | 89.0 | 94.2 | 99.1 |
| Sum of ratios (%) | | | 100.0 | 100.0 | 100.0 | 100.0 | 100.0 | 100.0 | 100.0 | 100.0 | 100.0 | 100.0 |
| Blending ratio of dispersing agent (pbw) | (A) | A-1 | | | | | | | | | 0.9 | 0.9 |
| | | A-2 | | | | | | | | | | |
| | | A-3 | | | | | | | | | | |
| | | A-4 | | | | | | | | 3.0 | | |
| | (B) | B-1 | 25.0 | | | | | | | 24.3 | | |
| | | B-2 | | 20.0 | | | | | | | | |
| | | B-3 | | | 20.0 | | | | | | | |
| | | B-4 | | | | 30.0 | | | | | | |
| | | B-5 | | | | | 30.0 | | | | | |
| | | B-6 | | | | | | 15.0 | | | 14.6 | |
| | | B-7 | | | | | | | 100 | | | 97.0 |
| | Solvent | dipropylene glycol | 0.0 | 0.0 | 0.0 | 0.0 | 0.0 | 0.0 | 0.0 | 0.0 | 2.1 | 2.1 |
| | | pure water | 75.0 | 80.0 | 80.0 | 70.0 | 70.0 | 85.0 | 0.0 | 72.8 | 82.5 | 0.0 |
| Amount of effective components in dispersing agent (%) | | | 25 | 20 | 20 | 30 | 30 | 15 | 100 | 27 | 15 | 98 |
| pH of aqueous solution of neutralized salt | | | 9 | 9 | 9 | 10 | 9 | 10 | - | 9 | 10 | - |
| Tests | | Foam height (mL) | 8 | 13 | 6 | 20 | 18 | 10 | - | 25 | 0 | - |
| | | Defoam height (mL) | 0 | 3 | 2 | 2 | 5 | 7 | - | 7 | 0 | - |

[Example 10]

A plastic vessel (polypropylene, volume 0.5 L) was charged with 15 parts of PS Red G (Mitsui Chemical Co., Ltd., C.I. Disperse Red 60) as the red disperse dye, 79.5 parts of deionized water as the aqueous solvent, 5.5 parts of the dispersing agent of Example 1, and 300 parts of zirconia beads having a diameter of 0.3 mm, which were shaken for dispersion for 5 hours on Paint Shaker (Asada Iron Works Co., Ltd.). At the end of dispersion, the zirconia beads were removed by filtration, yielding a dispersion.

[Examples 11 to 18 and Comparative Examples 11 to 21]

By the same procedure as in Example 10, dispersions as formulated in Tables 3 and 4 were prepared. Comparative Examples 18 and 21 failed to obtain a uniform dispersion because some components were not dissolved in water.
Each dispersion was measured for surface tension, viscosity, average particle size and dispersion stability by the following tests. The results are shown in Tables 3 and 4.

<Surface tension>

Using versatile surface tensiometer DY-500 (Kyowa Interface Science Co., Ltd.), the static surface tension at 25°C of a dispersion was measured immediately after dispersion.

<Viscosity>

Using E-type viscometer TVE-20 (Toki Sangyo Co., Ltd.), the viscosity at 25°C of a dispersion was measured immediately after dispersion and after heating at 60°C for 1 week.

<Average particle size>

Using zeta-potential, particle size and molecular weight analyzer ELSZ-2000 (Otsuka Electronics Co., Ltd.), the average particle size (D50) of a dispersion was measured immediately after dispersion and after heating at 60°C for 1 week and restoring to 25°C.

<Dispersion stability>

Using dispersion stability analyzer LUMiSizer (LUM GmbH), dispersion stability was evaluated. In this analysis, the interfacial transport rate (sedimentation rate of particles) was measured under conditions: temperature immediately after dispersion 25°C, rotational speed 4,000 rpm, and analysis time 50 minutes. After heating at 60°C for 1 week, the interfacial transport rate was measured under the same conditions.
A lower interfacial transport rate indicates better dispersion stability.

[Table 3]

| | | | Example | | | | | | | | |
|---|---|---|---|---|---|---|---|---|---|---|---|
| | | | 10 | 11 | 12 | 13 | 14 | 15 | 16 | 17 | 18 |
| Formulation of dispersion (pbw) | Example 1 | | 5.5 | | | | | | | | |
| | Example 2 | | | 5.5 | | | | | | | |
| | Example 3 | | | | 5.5 | | | | | | |
| | Example 4 | | | | | 5.2 | | | | | |
| | Example 5 | | | | | | 4.6 | | | | |
| | Example 6 | | | | | | | 6.7 | | | |
| | Example 7 | | | | | | | | 6.7 | | |
| | Example 8 | | | | | | | | | 4.7 | |
| | Example 9 | | | | | | | | | | 4.7 |
| | Disperse dye | DR-60 | 15 | 15 | 15 | 15 | 15 | 15 | 15 | 15 | 15 |
| | Solvent | pure water | 79.5 | 79.5 | 79.5 | 79.8 | 80.4 | 78.3 | 78.3 | 80.3 | 80.3 |
| Tests | Surface tension (mN/m) | | 52.4 | 41.3 | 45.7 | 48.5 | 43.5 | 43.7 | 45.4 | 58.6 | 52.8 |
| | Viscosity (mPa·s) | Immediately after dispersion | 2.3 | 2.1 | 2.1 | 2.1 | 2.1 | 2 | 3 | 2.3 | 2.3 |
| | | After 60°C/ 1 week | 2.1 | 1.9 | 2.1 | 2 | 1.9 | 1.9 | 2.4 | 2.3 | 2.1 |
| | Particle size (nm) | Immediately after dispersion | 130 | 101 | 123 | 132 | 131 | 128 | 88 | 161 | 118 |
| | | After 60°C/ 1 week | 149 | 192 | 223 | 148 | 283 | 203 | 74 | 184 | 132 |
| | Interfacial transport rate (μm/s) | Immediately after dispersion | 1.5 | 1.4 | 1.5 | 1.4 | 1.5 | 1.4 | 1.0 | 1.4 | 1.2 |
| | | After 60°C/ 1 week | 2.6 | 2.6 | 2.7 | 2.4 | 2.8 | 2.3 | 1.8 | 2.2 | 1.8 |

[Table 4]

| | | | Comparative Example | | | | | | | | | | |
|---|---|---|---|---|---|---|---|---|---|---|---|---|---|
| | | | 11 | 12 | 13 | 14 | 15 | 16 | 17 | 18 | 19 | 20 | 21 |
| Formulation of dispersion (pbw) | Comparative Example 1 | | 6.0 | 12.0 | | | | | | | | | |
| | Comparative Example 2 | | | | 7.5 | | | | | | | | |
| | Comparative Example 3 | | | | | 7.5 | | | | | | | |
| | Comparative Example 4 | | | | | | 5.0 | | | | | | |
| | Comparative Example 5 | | | | | | | 5.0 | | | | | |
| | Comparative Example 6 | | | | | | | | 10.0 | | | | |
| | Comparative Example 7 | | | | | | | | | 1.5 | | | |
| | Comparative Example 8 | | | | | | | | | | 5.5 | | |
| | Comparative Example 9 | | | | | | | | | | | 8.5 | |
| | Comparative Example 10 | | | | | | | | | | | | 1.5 |
| | Disperse dye | DR-60 | 15 | 15 | 15 | 15 | 15 | 15 | 15 | 15 | 15 | 15 | 15 |
| | Solvent | pure water | 79.0 | 73.0 | 77.5 | 77.5 | 80.0 | 80.0 | 75.0 | 83.5 | 79.5 | 76.5 | 83.5 |
| Tests | Surface tension (mN/m) | | 70.3 | 52.1 | 69.6 | 54.1 | 68.2 | 63.6 | 73.5 | - | 48.5 | 52.8 | - |
| | Viscosity (mPa·s) | Immediately after dispersion | 2.2 | 2.8 | 2.2 | 2.3 | 2.3 | 2.3 | 2.2 | - | 2.1 | 2.0 | - |
| | | After 60°C/ 1 week | 2.0 | 3.0 | 2.0 | 2.3 | 2.1 | 2.2 | 1.7 | - | 1.9 | 1.8 | - |
| | Particle size (nm) | Immediately after dispersion | 157 | 371 | 152 | 129 | 194 | 146 | 140 | - | 159 | 171 | - |
| | | After 60°C/ 1 week | 202 | 347 | 180 | 92 | 172 | 109 | 129 | - | 226 | 160 | - |
| | Interfacial transport rate (μm/s) | Immediately after dispersion | 3.3 | 3.5 | 2.4 | 1.7 | 2.6 | 1.8 | 2.7 | - | 3.1 | 3.3 | - |
| | | After 60°C/ 1 week | 4.1 | 6.4 | 3.3 | 2.4 | 3.9 | 2.4 | 2.9 | - | 4.9 | 4.1 | - |

## Claims

**1.** A dispersing agent comprising

(A) 1 to 50% by weight of an acetylenic surfactant which is at least one compound selected from acetylene glycols having the formula (1):

[Chem. 1]

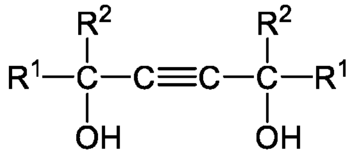

(1)

wherein $R^1$ and $R^2$ each are a $C_1$-$C_5$ alkyl group, and ethoxylated acetylene glycols having the formula (2):

[Chem. 2]

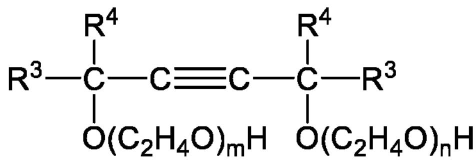

(2)

wherein $R^3$ and $R^4$ each are a $C_1$-$C_5$ alkyl group, m and n each are a positive number of 0.5 to 25, m+n is from 1 to 40, the compound having a molecular weight of up to 500, and

(B) 50 to 99% by weight of a partially or completely neutralized styrene/maleic anhydride copolymer salt which is obtained by partially or completely neutralizing a styrene/maleic anhydride copolymer having the formula (3):

[Chem. 3]

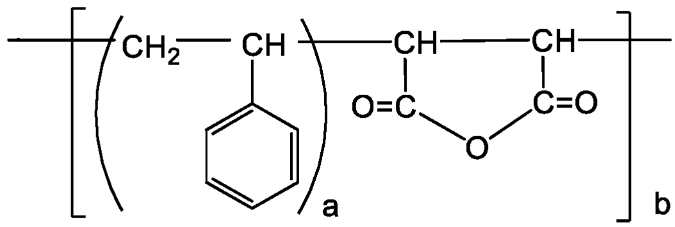

(3)

wherein a is an integer of 1 to 10 and b is an integer of 1 to 100, or a derivative thereof, and has a weight average molecular weight of less than 10,000.

2. The dispersing agent of claim 1 wherein in formula (3), a is 1 or 2.

3. The dispersing agent of claim 1 or 2 wherein the partially or completely neutralized styrene/maleic anhydride copolymer salt (B) is a salt obtained by partially or completely neutralizing the styrene/maleic anhydride copolymer or derivative thereof with ammonia, morpholine or an organic amine.

4. The dispersing agent of any one of claims 1 to 3, consisting of components (A) and (B).

5. The dispersing agent of any one of claims 1 to 4 wherein the acetylenic surfactant as component (A) has a HLB value of up to 12.

6. The dispersing agent of any one of claims 1 to 5 which takes the form of an aqueous solution containing 0.3% by weight of the dispersing agent calculated as the total of effective amounts of components (A) and (B), the aqueous solution having a foam height of up to 20 mL.

7. The dispersing agent of any one of claims 1 to 6 which is used for dispersing a disperse dye or pigment in an aqueous

solvent.

8. A dispersion comprising a dispersing agent, a disperse dye and/or pigment, and an aqueous solvent, the dispersing agent being of any one of claims 1 to 7.

9. An ink composition comprising the dispersion of claim 8.

10. A method of preparing a dispersion comprising the step of mixing and dispersing the dispersing agent of any one of claims 1 to 6, a disperse dye and/or pigment, and an aqueous solvent.

11. A method of preparing an ink composition comprising the steps of:

    mixing and dispersing the dispersing agent of any one of claims 1 to 6, a disperse dye and/or pigment, and an aqueous solvent to form a dispersion, and
    mixing the dispersion with at least one ingredient selected from the group consisting of water, a water-soluble organic solvent, resin, UV absorber, antioxidant, pH adjustor, antiseptic agent, and viscosity modifier.

## INTERNATIONAL SEARCH REPORT

International application No.
PCT/JP2021/024347

A. CLASSIFICATION OF SUBJECT MATTER
Int. Cl. B01F17/42(2006.01)i, B01F17/52(2006.01)i, C09D11/03(2014.01)i
FI: B01F17/42, G09D11/03, B01F17/52

According to International Patent Classification (IPC) or to both national classification and IPC

B. FIELDS SEARCHED
Minimum documentation searched (classification system followed by classification symbols)
Int. Cl. B01F17/42, B01F17/52, C09D11/03

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| Y | JP 2003-003101 A (SEIKO EPSON CORP.) 08 January 2003 (2003-01-08), claims, paragraphs [0006], [0024]-[0029], [0043], [0045]-[0068] | 1-11 |
| Y | JP 2005-041992 A (DAINIPPON INK AND CHEMICALS, INC.) 17 February 2005 (2005-02-17), claims, paragraphs [0017], [0034]-[0110], examples (in particular, example 2) | 1-11 |
| A | JP 2008-274037 A (GENERAL TECHNOLOGY KK) 13 November 2008 (2008-11-13), claims, examples | 1-11 |
| A | JP 2004-066047 A (NISSHIN KAGAKU KOGYO KK) 04 March 2004 (2004-03-04), claims, examples | 1-11 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01.09.2021 | 14.09.2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/024347

| Patent Documents referred to in the Report | Publication Date | Patent Family | Publication Date |
|---|---|---|---|
| JP 2003-003101 A | 08.01.2003 | US 2002/0120034 A1 claims, paragraphs [0004], [0041]-[0055], [0083], [0088]-[0156]<br>EP 1203797 A1 | |
| JP 2005-041992 A | 17.02.2005 | (Family: none) | |
| JP 2008-274037 A | 13.11.2008 | (Family: none) | |
| JP 2004-066047 A | 04.03.2004 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000290578 A
- JP 2002020673 A
- JP H09104837 A
- JP 2005029706 A
- JP 2018090666 A
- JP 2004066047 A
- JP 2019172834 A
- JP 2004224833 A